# EUROPÄISCHE PATENTSCHRIFT

(11) **EP 2 649 119 B1**
(45) Veröffentlichungstag und Bekanntmachung des Hinweises auf die Patenterteilung: **06.04.2016**
(21) Anmeldenummer: 11794457.9
(22) Anmeldetag: 06.12.2011
(51) Int. Cl.: C08J 9/36, C08J 9/35, C08L 61/28, C08J 9/00

(54) **MELAMINHARZSCHAUMSTOFFE MIT NANOPORÖSEN FÜLLSTOFFEN**
MELAMINE RESIN FOAMS COMPRISING NANOPOROUS FILLERS
MOUSSES DE RÉSINE DE MÉLAMINE CONTENANT DES MATIÈRES DE CHARGE NANOPOREUSES

(30) Priorität: 07.12.2010 EP 10193963; 23.08.2011 EP 11178396
(43) Veröffentlichungstag der Anmeldung: 16.10.2013
(73) Patentinhaber: BASF SE, 67056 Ludwigshafen am Rhein (DE)
(72) Erfinder: STEINKE, Tobias Heinz, 67346 Speyer (DE); ULANOVA, Tatiana, 67063 Ludwigshafen (DE); HAHN, Klaus, 67281 Kirchheim (DE)
(74) Vertreter: BASF IP Association
(86) Internationale Anmeldenummer: PCT/EP2011/071840
(87) Internationale Veröffentlichungsnummer: WO 2012/076492

(56) Entgegenhaltungen:
- EP-A2- 1 808 454
- EP-B1- 2 158 243
- DE-A1- 19 533 564
- US-A1- 2007 259 979
- US-A1- 2008 287 561

## Beschreibung

Die Erfindung betrifft mit nanoporösen Partikeln, insbesondere Aerogelen oder Aerosilen, gefüllte offenzellige Melaminharzschaumstoffe, ihre Herstellung und Verwendung.

Aerogele und Aerosile sind hochporöse Festkörper, bei denen der überwiegende Teil des Volumens aus Poren besteht. Die Aerogele können beispielsweise auf Silikat-Basis, aber auch auf Kunststoff- oder Kohlenstoff-Basis basieren. Die Poren der Aerogele weisen einen Durchmesser auf, der im Nanometer-Bereich liegt. Infolge des großen Porenvolumens eignen sich die Aerogele insbesondere als Isoliermaterialien mit hervorragenden Isolationseigenschaften bei geringer Dichte. Die Aerogele liegen zunächst als Partikel vor und können unter Verwendung von Bindern einer Formgebung unterworfen und beispielsweise zu Platten gepresst werden.

In der Literatur werden Aerogele auch als Gele mit Luft als Dispersionsmittel bezeichnet. Aerogele können hergestellt werden durch Trocknung eines geeigneten Gels. Der Formgebungsprozess des Aerogels wird während des Sol-Gel-Übergangs abgeschlossen. Nach Ausbildung der festen Gelstruktur kann die äußere Form nur noch durch Zerkleinern, beispielsweise Mahlen, verändert werden. Unter dem Begriff Aerogel werden in Rahmen der vorliegenden Erfindung auch Xerogele und Kryogele verstanden.

Aus der EP-A-1 146 070 A2 ist die Imprägnierung von Melamin-Formaldehyd-Schaumstoffen mit einem Ammoniumsalz und aus der WO-A-2007/23118 die Imprägnierung mit Natriumsilikat bekannt.

Aus der DE-A-10 2007 009127 A1 sind faserverstärkte Schaumstoffe auf Basis von Melamin-/Formaldehyd-Harzen mit einem Faseranteil von 0,5 bis 50 Gew.-% bekannt. Als faserförmiger Füllstoff werden Kurz- oder Langfasern aus Glas, Kohlenstoff oder Melaminharz eingesetzt.

Aus der WO-A-2009/021963 A1 ist ein Verfahren zur Herstellung eines abrasiven Schaumstoffs auf Basis eines Melamin-Formaldehyd-Kondensationsproduktes bekannt, welches 0,01 bis 50 Gew.-% anorganische Nanopartikel bezogen auf das Gewicht des Vorkondensats enthält.

Aus der US-2009/029147 A1 sind Aerogel/Schaum-Verbundmaterialien bekannt, die eine Dichte von < 150 g/L und eine thermische Leitfähigkeit von < 50 mW/m*K aufweisen. Der Sol-Gel-Prozess wird in dem Schaumstoff durchgeführt. Die Trocknung erfolgt im überkritischen Zustand.

Aus der DE 19533564 A1 ist ein Verbundmaterial bekannt, das 5 bis 97 Vol.-% Aerogel-Partikel, mindestens ein Bindemittel und mindestens ein Fasermaterial enthält, ein Verfahren zu seiner Herstellung sowie seine Verwendung. Der so erhaltene Probekörper weist eine sehr hohe Dichte (380 g/l) und Wärmerleitfähigkeit (37mW/mK) auf.

EP 1 808 454 A2 offenbart einen treibmittelfreien Aminoharzschaumstoff, Verfahren zu dessen Herstellung und dessen Verwendung. Diesem Dokument liegt die Aufgabe zugrunde, einen hydrophobierten, mechanisch stabilen Aminoharzschaum für die Schall- und Wärmedämmung zu entwickeln, der mittels eines intensiven mechanischen Schäumungsprozesses ohne Zusatz von speziellen Treibmitteln auf technologisch einfache Weise hergestellt werden kann. Dazu wird ein treibmittelfreier Aminoharzschaum bereitgestellt, der ein Aminoharzschaum und zumindest an der Oberfläche hydrophobe Nanopartikel aus einem anorganischen und/oder organischen Material enthält. Gemäß den Beispielen wird ein Melaminharz mit AEROSIL R812, bzw. AEROSIL R8200 gemischt und zu einem Schaumstoff verarbeitet.

Die Eigenschaften der bekannten Materialien entsprechen nicht mehr den gestiegenen Anforderungen, insbesondere hinsichtlich Wärmeleitfähigkeit und Schallabsorption.

Aufgabe der Erfindung was es daher, verbesserte Verbundmaterialien bereitzustellen, die bei relativ geringem Bindemittelanteil eine verbesserte Wärmeleitfähigkeit und Schallabsorption und eine niedrige Dichte aufweisen können. Die Verbundmaterialien sollen sich außerdem auf einfache Weise herstellen lassen. Des Weiteren sollen erfindungsgemäß Verbundmaterialien bereitgestellt werden, die zusätzlich die Brandklassifizierung A2 gemäß DIN EN 13501-1 haben.

Die Erfindung betrifft einen Melaminharzschaumstoff enthaltend Partikel, dadurch gekennzeichnet, dass die Partikel nanoporös und insbesondere granulär sind, wobei der Schaumstoff eine Porengröße von 10 bis 1000 µm aufweist, die nanoporösen Partikel eine Partikelgröße (D₅₀-Wert) von 0,1 bis 100 µm, besonders bevorzugt von 1 bis 30 µm, aufweisen, und die Dichte des Schaumstoffes enthaltend Partikel im Bereich von 20 bis 70 g/l liegt. In einer bevorzugten Ausführungsform sind die Partikel anorganische Partikel. Erfindungsgemäß sind die Partikel im Volumen des Schaumstoffs enthalten, vorzugsweise in homogener Verteilung. Zusätzlich kann der Schaumstoff auch eine Beschichtung, enthaltend die Partikel, aufweisen.

Die Erfindung betrifft weiterhin in einer ersten Ausführungsform ein Verfahren zur Herstellung eines Melaminharzschaumstoffes enthaltend nanoporöse, vorzugsweise anorganische, Partikel, dadurch gekennzeichnet, dass der Melaminharzschaumstoff mit den nanoporösen Partikeln imprägniert und gegebenenfalls anschließend thermokomprimiert wird, wobei der Schaumstoff eine Porengröße von 10 bis 1000 µm aufweist, die nanoporösen Partikel eine Partikelgröße (D₅₀-Wert) von 0,1 bis 100 µm, besonders bevorzugt von 1 bis 30 µm, aufweisen, und die Dichte des Schaumstoffes enthaltend Partikel im Bereich von 20 bis 70 g/l liegt. Die Partikel haben vorzugsweise eine Größe, die kleiner als der Porenraum des Schaumstoffs ist. Vorzugsweise sind die Partikel granulär.

Des Weiteren betrifft die vorliegende Erfindung in einer zweiten Ausführungsform ein Verfahren zur Herstellung eines Melaminharzschaumstoffes enthaltend nanoporöse granuläre Partikel, dadurch gekennzeichnet dass eine Mischung hergestellt wird, enthaltend mindestens ein Melamin/Formaldehyd-Vorkondensat, mindestens ein Lösungsmittel und mindestens einen nanoporösen Partikel, diese Mischung verschäumt und der erhaltene Schaumstoff anschließend getrocknet und gegebenenfalls thermokomprimiert wird, wobei der Schaumstoff eine Porengröße von 10 bis 1000 µm aufweist, die nanoporösen Partikel eine Partikelgröße (D₅₀-Wert) von 0,1 bis 100 µm, besonders bevorzugt von 1 bis 30 µm, aufweisen, und die Dichte des Schaumstoffes enthaltend Partikel im Bereich von 20 bis 70 g/l liegt.

Die Erfindung betrifft weiterhin die Verwendung eines erfindungsgemäßen Schaumstoffs zur Wärme- oder Schalldämmung.

Soweit nicht anders ausgeführt, werden im Rahmen der vorliegenden Erfindung die verwendeten Begriffe wie folgt definiert und die genannten Messgrößen wie folgt bestimmt:
- Partikel:: Als Partikel werden Teilchen bezeichnet, die entweder monolithisch sind, d. h. aus einem Stück bestehen, oder aber die im Wesentlichen Partikel mit einem Durchmesser kleiner als der des Teilchens enthalten, die gegebenenfalls durch ein geeignetes Bindemittel verbunden sind, oder durch Pressen zu größeren Teilchen zusammengefügt sind.
- Porosität:: Verhältnis von Hohlraumvolumen zu Gesamtvolumen, gemessen gemäß Stickstoffadsorption und -desorption (< 100 nm) und Quecksilberporosimetrie (> 100 nm)
- Hydrophob:: Unter hydrophoben Stoffen werden im Rahmen der vorliegenden Stoffe derartige Stoffe verstanden, die bei Raumtemperatur einen Kontaktwinkel von mehr als 90° gegenüber Wasser aufweisen.
- Nanoporös:: Unter nanoporös wird verstanden, dass die Poren der Partikel eine Größe von 0,1 bis 500 nm, insbesondere < 200 nm, besonders bevorzugt < 100 nm (D₅₀) aufweisen und die Porosität insbesondere von 50 bis 99, insbesondere 70 bis 99, besonders bevorzugt 80 bis 99 beträgt.
- Granulär:: bedeutet, dass die Teilchen in einer ersten Ausführungsform bevorzugt in einer Größe von 0,1 bis 100 µm, bevorzugt von 1 bis 30 µm (D₅₀) vorliegen und das Verhältnis der längsten Raumachse zur kürzesten Raumachse der Partikel bevorzugt 4:1 bis 1:1 beträgt. In einer zweiten erfindungsgemäßen Ausführungsform bedeutet "granulär", dass die Teilchen bevorzugt in einer Größe von 0,11 bis 25 mm, besonders bevorzugt von 0,15 bis 22 mm (D₅₀) vorliegen und das Verhältnis der längsten Raumachse zur kürzesten Raumachse der Partikel bevorzugt 4:1 bis 1:1 beträgt.
- Aerosil:: Unter Aerosil wird pyrogene Kieselsäure verstanden, die herstellbar ist durch Hydrolyse von Siliziumtetrachlorid und vorzugsweise eine Primärpartikelgröße von 5 bis 50 nm (D₅₀). aufweist.
- D₅₀-Wert:: Kerngröße, bei der 50 % der Partikel feiner und 50 % größer sind als der angegebene Wert.

Der Anteil an nanoporösen Partikeln im Melaminharzschaumstoff beträgt vorzugsweise 1 bis 99 Vol-%, bevorzugt 5 bis 95 %, besonders bevorzugt 10 bis 90 %.

Die vorliegende Erfindung betrifft daher bevorzugt den erfindungsgemäßen Schaumstoff, wobei der Schaumstoff 1 bis 99 Vol-%, bevorzugt 5 bis 95 Vol.-%, besonders bevorzugt 10 bis 90 Vol.-%, nanoporöse Partikel oder deren Gemische enthält.

Als schaumfähiges Reaktivharz eignen sich Melamin-Formaldehydharze, besonders bevorzugt Melamin-Formaldehydharze, die zu einem offenzelligen Schaum mit einer Dichte von ≤ 25 g/l, also 1,6 bis 25 g/l, bevorzugt 2 bis 15 g/l, besonders bevorzugt 3 bis 13 g/l, insbesondere 4 bis 12 g/l und/oder einer Porengröße zwischen 10 und 1000 µm, bevorzugt 50 und 300 µm verarbeitet werden können.

### Melaminharzschaumstoff

Die vorliegende Erfindung betrifft bevorzugt den erfindungsgemäßen Schaumstoff, wobei der Schaumstoff ein Melamin/Formaldehydharz ist.

Herstellverfahren für offenzellige, elastische Melamin-/Formaldehydharze und deren Schäume sind beispielsweise aus WO-A-01/94436 bekannt und unter dem Handelsnamen Basotect^{®} kommerziell erhältlich.

Demnach sind die Schaumstoffe gemäß der ersten Ausführungsform bevorzugt erhältlich durch Verschäumen einer wässrigen Lösung eines Melamin/Formaldehyd-Kondensationsproduktes, wobei die Lösung einen Emulgator, ein saures Härtungsmittel und ein Treibmittel, vorzugsweise einen C₅- bis C₇-Kohlenwasserstoff, enthält. Anschließend wird das Melamin/Formaldehyd-Kondensat bei erhöhter Temperatur ausgehärtet.

Als offenzellige Schäume werden solche bezeichnet, bei denen das Schaumgerüst im Wesentlichen aus einer Vielzahl miteinander verbundener, dreidimensional verzweigter Zellstege besteht.

Die Rohdichte des offenzelligen Schaumstoffes liegt in der Regel im Bereich von 5 bis 100 g/l, bevorzugt im Bereich von 8 bis 20 g/l. Die Porengröße beträgt bevorzugt 10 bis 1000 um.

Die zur Herstellung der erfindungsgemäßen Melamin-Formaldehyd-Schaumstoffe eingesetzten Melamin-Formaldehyd-Vorkondensate weisen in der Regel ein Molverhältnis von Formaldehyd zu Melamin 5:1 bis 1,3:1, bevorzugt 3,5:1 bis 1,5:1 auf. Dies gilt für beide erfindungsgemäßen Ausführungsformen gleichermaßen.

### Nanoporöse Partikel

Bevorzugte nanoporöse Partikel sind granulär. Die nanoporösen Partikel sind in weiteren bevorzugten Ausführungsformen Aerogele oder Aerosile. Diese können anorganisch, anorganisch-organisch oder organisch sein.

Die vorliegende Erfindung betrifft daher bevorzugt den erfindungsgemäßen Schaumstoff, wobei die Partikel Aerogele oder Aerosile sind.

Die vorliegende Erfindung betrifft daher weiter bevorzugt den erfindungsgemäßen Schaumstoff, wobei die Partikel anorganisch sind.

Die vorliegende Erfindung betrifft daher weiter bevorzugt den erfindungsgemäßen Schaumstoff, wobei die Partikel organisch sind.

### Aerogel

Im Allgemeinen geeignete Aerogele für die erfindungsgemäßen Verbundmaterialien sind insbesondere solche auf Basis von Oxiden, insbesondere Siliziumdioxid und Metalloxiden, wie insbesondere Aluminium- Titan- und Zirkoniumoxid, oder solche auf der Basis organischer Stoffe, wie zum Beispiel Melaminformaldehydkondensate (US-A-5,086,085), Resorcinformaldehydkondensate (US-A-4,873,218) sowie Aerogele, die durch Polymerisation von Furfural mit phenolischen Novolak-Harzen herstellbar sind. Besonders geeignet sind Verbindungen, die für die Sol-Gel-Technik geeignet sind, siehe z. B. WO 97/10188 A1, Seite 7, erster Absatz. wie beispielsweise Si- oder AI-Verbindungen. Sie können aber auch auf Mischungen der oben genannten Materialien basieren. Bevorzugt verwendet werden Aerogele enthaltend Si-Verbindungen. Besonders bevorzugt sind Aerogele enthaltend SiO₂, insbesondere SiO₂-Aerogele, die gegebenenfalls organisch modifiziert sind.

Die nanoporösen Partikel sind bevorzugt SiO₂-Aerogele mit folgenden Parametern:
- Porosität:: 50 bis 99, insbesondere 70 bis 99, besonders bevorzugt 80 bis 99
- Dichte:: von 30 bis 300 g/L, bevorzugt ≤ 150 g/L
- Partikeldurchmesser:: von 0,1 bis 100 µm, bevorzugt von 1 bis 30 µm (D₅₀)
- Porendurchmesser:: 0,1 bis 500 nm, insbesondere < 200 nm, besonders bevorzugt < 100 nm

Die vorliegende Erfindung betrifft bevorzugt den erfindungsgemäßen Schaumstoff, wobei die Partikel eine Porosität von 50 bis 99, insbesondere 70 bis 99, besonders bevorzugt 80 bis 99 aufweisen.

Darüber hinaus gilt, dass die thermische Leitfähigkeit der Aerogele mit zunehmender Porosität und abnehmender Dichte abnimmt, und zwar bis zu einer Dichte im Bereich von 0,1 g/cm³. Die Wärmeleitfähigkeit des Aerogel-Granulates sollte vorzugsweise weniger als 40 mW/mK, besonders bevorzugt weniger als 25 mW/mK betragen.

Besonders bevorzugte Aerogele sind Silica-Aerogele, die im Wesentlichen aus amorphem Siliziumdioxid bestehen, aber abhängig von der Art ihrer Herstellung noch organische Verbindungen enthalten können.

Silica-Aerogel-Partikel können in bekannter Weise aus Wasserglaslösung über die Stufen Silica-Hydrogel, Lösungsmittelaustausch und anschließender überkritischer Trocknung hergestellt werden. Die in der Regel vorliegende Perlform ergibt sich hierbei durch das Versprühen eines schnell gelierenden Kieselsäuresols aus einer speziell konstruierten Düse und Gelierung der Tropfen im Fluge. Nähere Einzelheiten hierzu sind in der DE-A-21 03 243 beschrieben. Der Austausch von Hydrogelwasser gegen andere gegen Siliziumdioxid chemisch inerte Flüssigkeiten ist beispielsweise in US-A-2,093,454, US-A-3,977,993 sowie JP-A-53/025 295 beschrieben.

Die Aerogel-Partikel können in monomodaler, bimodaler oder multimodaler Verteilung eingesetzt werden.

In einer bevorzugten Ausführungsform weisen die Aerogel-Partikel hydrophobe Oberflächengruppen auf.

Die vorliegende Erfindung betrifft daher bevorzugt den erfindungsgemäßen Schaumstoff, wobei die Partikel organisch modifiziert, insbesondere hydrophob modifiziert sind.

Geeignete Gruppen zur dauerhaften Hydrophobisierung sind beispielsweise trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann durch Gasphasenreaktion zwischen dem Aerogel und beispielsweise einem aktivierten Trialkylsilan-Derivat, wie z. B. einem Chlortrialkylsilan oder einem Hexaalkyldisilazan geschehen.

Eine elegante Methode zur Einführung hydrophober Gruppen ist in EP 0 171 722 und WO 95/06617 beschrieben. Hierbei wird das Wasser im Hydrogel durch Alkohole verdrängt. Als Alkohole eignen sich für den Wasseraustausch C₁-C₅-Alkohole, insbesondere C₃-C₅-Alkohole, wobei diejenigen Alkohole bevorzugt sind, die nicht zu Aldehyden oxidiert werden können, also sekundäre und tertiäre Alkohole. Außerdem sollten die Alkohole günstige kritische Daten für die Trocknung aufweisen. Insbesondere seien zum Beispiel Isobutanol, tert-Butanol, sek.-Pentanol und tert.-Pentanol und vor allem Isopropanol genannt. Neben den einwertigen Alkoholen sind auch mehrwertige Alkohole wie Ethylenglykol und Glycerin zu nennen, (aus WO 95/06617, Seite 3, Zeile 32 ff.). Auf diese Art hydrophobierte nanoporöse Partikel werden bevorzugt gemäß der zweiten Ausführungsform eingesetzt.

### Funktionalisierung der nanoporösen Partikel

Die nanoporösen Partikel, insbesondere Aerogele können im Allgemeinen im Schaumstoff fixiert werden. Die Fixierung der nanoporösen Partikel im Melaminharzschaumstoff kann durch Einführung von Reaktivgruppen in die Nanostruktur oder durch Einbringen geringer Mengen an Bindemitteln unterstützt werden.

Zur chemischen Funktionalisierung der Nanostruktur eignen sich beispielsweise funktionalisierte chemische Verbindungen wie Alkoxysilane, wie z. B. 3-Aminopropyltriethoxysilan oder 3-Aminopropylmethoxysilan. Diese Reaktivgruppen werden im ersten Schritt über die Silan-Einheit an das Aerogel gebunden und im 2. Schritt erlaubt die Aminogruppe eine chemische Anbindung an die auf der Oberfläche des Melaminharzschaumstoffs verbliebenen Reaktivgruppen.

Geeignete Systeme zur Funktionalisierung sind in der WO 2005103107 A1, Seite 9, Zeile 18 bis Seite 15, Zeile 4, beschrieben und sind in dieser Anmeldung ausdrücklich enthalten.

Als Bindemittel eignen sich polymere Stoffe beispielsweise Melamin-FormaldehydHarze. Geeignete Polyurethanharze, Polyesterharze oder Epoxidharze sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Poly-urethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Beispiele auf Basis von Melamin- und Phenolharz sowie Acrylamid sind in EP0451535B1 und DE19649796A1 beschrieben.

Die nanoporösen Partikel können vor dem Imprägnierschritt oder direkt in der Schaumstruktur mit den Klebhilfsstoffen imprägniert werden.

Die Menge des Bindemittels kann in weiten Grenzen variiert werden und beträgt in der Regel 1 bis 20 Gew.-%, bevorzugt 1 bis 10 Gew.-%, besonders bevorzugt 1 bis 5 Gew.-% bezogen auf die nanoporösen Partikel, vorteilhaft wird die Menge des Bindemittels minimal eingestellt, um eine entsprechende Beschichtung zu gewährleisten.

### Additive

Der Schaumstoff kann in wirksamen Mengen weitere Zusatzstoffe wie z. B. Farbstoffe, Pigmente, Füllstoffe, Flammschutzmittel, Synergisten für Flammschutzmittel, Antistatica, Stabilisatoren, Weichmacher und IR-Trübungsmittel enthalten.

Die vorliegende Erfindung betrifft daher bevorzugt einen erfindungsgemäßen Schaumstoff, wobei zusätzlich Trübungsmittel enthalten sind.

Zur Reduktion des Strahlungsbeitrags zur Wärmeleitfähigkeit kann der Schaumstoff IR-Trübungsmittel wie z. B. Metalloxide, Nichtmetalloxide, Metallpulver, z. B. Aluminiumpulver, Kohlenstoff, z. B. Ruß, Graphit, Diamant oder organische Farbstoffe und Farbstoffpigmente enthalten, was besonders für Anwendungen bei hohen Temperaturen vorteilhaft ist. Besonders bevorzugt sind Ruß, Titandioxid, Eisenoxide oder Zirkondioxid. Die vorstehend genannten Materialien können sowohl jeweils alleine als auch in Kombination, d. h. in Form einer Mischung aus mehreren Materialien, Verwendung finden.

### Imprägnierung

Gemäß der ersten Ausführungsform der vorliegenden Erfindung wird der erfindungsgemäße Melaminharzschaumstoff, enthaltend Partikel in einer Größe von 0,1 bis 100 µm, bevorzugt von 1 bis 30 µm (D₅₀), bevorzugt durch Imprägnierung des Schaumstoffs mit den entsprechenden nanoporösen Partikeln erhalten.

Die erfindungsgemäße Imprägnierung eines flexiblen, offenzelligen Melaminharzschaums, vorzugsweise Basotect^{®} der BASF SE, wird mit nanoporösen Partikeln, wie beispielsweise Aerogel oder Aerosil, bevorzugt durch Imprägnieren des Schaums mit einer granulären Schüttung der nanoporösen Partikel realisiert. Die Imprägnierung erfolgt bevorzugt im trockenen Zustand im Unterdruck. Somit entfallen nachträgliche Entwässerungs- und Trocknungsschritte.

Die Teilchengröße der nanoporösen Partikel muss dabei, d. h. in dieser ersten Ausführungsform, bevorzugt kleiner als der mittlere Porendurchmessers des Melaminharzschaumstoffs gewählt sein. Es werden bevorzugt Teilchengrößen mit einem D₅₀-Wert ≤ 100 µm und besonders bevorzugt ≤ 30 µm eingesetzt.

Die Aerogele können durch Anlegen eines Unterdrucks in den Melaminharzschaumstoff eingesaugt werden. Der Unterdruck kann nach allen dem Fachmann bekannten Verfahren erzeugt werden, wie z. B. eine Vakuumpumpe. Es werden Drücke von 1 bis 900 mbar, bevorzugt 10 bis 800, besonders bevorzugt 10 bis 500 mbar, angelegt. Um ein Entweichen der Aerogele aus dem Schaumstoff in die Pumpe zu verhindern, kann beispielsweise ein feiner Filter zwischen Schaumstoff und Pumpe gelegt und bei Bedarf gewechselt werden.

Alternativ kann in dieser ersten Ausführungsform das Einbringen der nanoporösen Partikel in den Melaminharzschaumstoff auch durch Einblasen der nanoporösen Partikel mittels Überdruck oder durch Imprägnieren des Schaums mit einer wässrigen Imprägnierlösung erfolgen. Letztere Methode bedarf der Dispergierung der nanoporösen Partikel in einer Flüssigkeit. Die Flüssigkeit muss so gewählt sein, dass die nanoporösen Partikel nur oberflächlich benetzt werden. Die oberflächliche Benetzung kann durch Dispergiermittel verbessert werden. Als Dispergiermittel bzw. Emulgator können anionische, kationische und nicht ionische Tenside sowie Mischungen davon eingesetzt werden. Die überflüssige Flüssigkeit wird anschließend abgepresst und der Schaumstoff wird bei 120 bis 200 °C getrocknet.

Um das Aufnahmevermögen des flexiblen Melaminharzschaumstoffs zu verbessern, kann der Schaumstoff zusätzlich komprimiert und beim Imprägnierschritt dekomprimiert werden. Das Komprimieren des Schaumstoffs kann nach allen dem Fachmann bekannten Methoden erfolgen. Als druckgebende Körper können beispielsweise Walzen, Kalander, Doppellaufbänder oder Stempel eingesetzt werden. Der Melamin-/Formaldehydharzschaumstoff wird in der Regel auf 1 bis 80 %, bevorzugt 2 bis 50 %, besonders bevorzugt 3 bis 30 % des Volumens gepresst.

Das Auftragen der Mischung auf den Schaumstoff und das Pressen des Schaumstoffes können zum Beispiel wie in EP-A 0451 535 beschrieben, durchgeführt werden. Hierzu wird der Schaumstoff zwischen zwei sich in entgegengesetzter Richtung drehenden Walzen hindurchgeführt, wobei der Abstand der Walzen so gewählt ist, dass der Schaumstoff hierbei zusammengepresst wird. Die Mischung, mit der der Schaumstoff imprägniert wird, wird auf die horizontalen nebeneinander liegenden Walzen aufgegeben, so dass sich an der Stelle, an der der Schaumstoff durch die die Walzen hindurchbewegt wird, ein Flüssigkeitspool ausbildet. Durch die Rotationsbewegung der Walzen und das Pressen des Schaumstoffes wird die Mischung, die im Flüssigkeitspool enthalten ist, in den Schaumstoff eingepresst.

In einer bevorzugten Ausführungsform wird der Schaumstoff in einem zweiten Schritt thermokomprimiert. Aus der WO-A-2007/031944, der EP-A-451 535, der EP-A-111 860 und der US-B-6 608 118 sind Verfahren bekannt, die das nachträgliche Komprimieren von Melamin/Formaldehyd-Schaumstoffen beschreiben. Durch die Komprimierung erhalten die nanoporösen Partikel eine verbesserte Fixierung in der offenzelligen Schaumstruktur und die Packung der nanoporösen Partikel wird verdichtet, was zu einer Herabsetzung der Wärmeleitfähigkeit führt.

Die Komprimierung kann wahlweise im Bereich von 1 bis 90 %, bevorzugt 5 bis 80 %, besonders bevorzugt 10 bis 70 %, insbesondere bevorzugt 20 bis 60 % bezogen auf die Ausgangshöhe (Schäumungshöhe) erfolgen. In Abhängigkeit von der Komprimierung liegen die Dichten der elastischen Schaumstoffe mit nanoporösen Partikeln im Bereich von 20 bis 70 g/L.

Die zur Herstellung der erfindungsgemäßen Melamin-Formaldehyd-Schaumstoffe eingesetzten Melamin-Formaldehyd-Vorkondensate-weisen in der Regel ein Molverhältnis von Formaldehyd zu Melamin 5:1 bis 1,3:1, bevorzugt 3,5:1 bis 1,5:1 auf. Dies gilt für beide erfindungsgemäße Ausführungsformen gleichermaßen.

Diese Melamin/Formaldehyd-Kondensationsprodukte können neben Melamin 0 bis 50 Gew.-%, bevorzugt 0 bis 40 Gew.-%, besonders bevorzugt 0 bis 30 Gew.-%, insbesondere 0 bis 20 Gew.-% anderer Duroplastbildner und neben Formaldehyd 0 bis 50 Gew.-%, bevorzugt 0 bis 40 Gew.-%, besonders bevorzugt 0 bis 30 Gew.-%, insbesondere 0 bis 20 Gew.-% anderer Aldehyde einkondensiert enthalten. Bevorzugt sind unmodifizierte Melamin/Formaldehyd-Vorkondensate.

Als Duroplastbildner eignen sich beispielsweise Alkyl- und Arylsubstitulertes Melamin, Harnstoff, Urethane, Carbonsäureamide, Dicyandiamid, Guanidin, Sulfurylamid, Sulfonsäureamide, aliphatische Amine, Glykole, Phenol oder deren Derivate.

Als Aldehyde eignen sich beispielsweise Acetaldehyd, Trimethylolacetaldehyd, Acrolein, Benzaldehyd, Furfural, Glyoxal, Glutaraldehyd, Phthalaldehyd, Terephthalaldehyd oder deren Gemische. Weitere Einzelheiten über Melamin/Formaldehyd-Kondensationsprodukte finden sich in Houben-Weyl, Methoden der organischen Chemie, Band 14/2,1963, Seiten 319 bis 402.

Die Melamin-/Formaldehyd-Schaumstoffe lassen sich bevorzugt wie folgt herstellen:
Die partikelförmigen Füllmaterialien können den zur Schaumherstellung eingesetzten Einsatzstoffen, d.h. dem Melamin, dem Formaldehyd, deren Mischungen oder einem Melamin-/Formaldehyd-Vorkondensat, während des Schäumprozesses, bevorzugt aber vor dem Schäumprozess, zugefügt werden.

Die vorliegende Erfindung betrifft daher gemäß einer zweiten Ausführungsform ein Verfahren zur Herstellung eines Melaminharzschaumstoffes enthaltend nanoporöse granuläre Partikel, wobei eine Mischung hergestellt wird, enthaltend mindestens ein Melamin/Formaldehyd-Vorkondensat, mindestens ein Lösungsmittel und mindestens einen nanoporösen Partikel, diese Mischung verschäumt und der erhaltene Schaumstoff anschließend getrocknet und gegebenenfalls thermokomprimiert wird, wobei der Schaumstoff eine Porengröße von 10 bis 1000 µm aufweist, die nanoporösen Partikel eine Partikelgröße (D₅₀-Wert) von 0,1 bis 100 µm, besonders bevorzugt von 1 bis 30 µm, aufweisen, und die Dichte des Schaumstoffes enthaltend Partikel im Bereich von 20 bis 70 g/l liegt.

Bevorzugt können ein Melamin-Formaldehyd-Vorkondensat und ein Lösungsmittel mit einer Säure, einem Dispergiermittel, einem Treibmittel und partikelförmigem Füllmaterial bei Temperaturen oberhalb der Siedetemperatur des Treibmittels verschäumt und anschließend getrocknet werden.

In einer besonderen Ausführungsform werden die nanoporösen Partikel nach dem Fachmann bekannten Methoden vor der Zugabe zum Schäumprozess mit Bindemitteln beschichtet. Dies kann beispielsweise mittels einer Sprühvorrichtung in einer Mischvorrichtung (z. B. Intensivmischer, beispielsweise der Fa. Elrich) erfolgen. Somit wird eine homogene Benetzung der Füllmaterialien erzielt. In einer besonderen Ausführungsform lässt man das Beschichtungsmaterial nicht vollständig aushärten, um die Anbindung im Schaumstoff zu erhöhen.

Als Melamin-/Formaldehyd-Vorkondensate eignen sich eigens hergestellte (siehe Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003) oder handelsübliche Vorkondensate der beiden Komponenten, Melamin und Formaldehyd. Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Eine besonders bevorzugte Verfahrensvariante zur Herstellung des erfindungsgemäßen Schaumstoffes umfasst die Stufen:
(1) Herstellen einer Suspension enthaltend ein Melamin/Formaldehyd-Vorkondensat des herzustellenden Schaumstoffs, mindestens ein Lösungsmittel und mindestens einen nanoporösen Partikel, und gegebenenfalls weitere Zusatzkomponenten,
(2) Aufschäumen des Vorkondensates durch Erhitzen der Suspension aus Schritt (1) auf eine Temperatur oberhalb der Siedetemperatur des Treibmittels,
(3) Trocknen des aus Schritt (2) erhaltenen Schaumstoffs.

Die einzelnen Verfahrensschritte und die verschiedenen Variationsmöglichkeiten werden nachfolgend näher ausgeführt.

Es können bei der Herstellung des Melamin-/Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Es können in Schritt (1) auch Dispergiermittel bzw. Emulgator, beispielsweise anionische, kationische und nicht ionische Tenside sowie Mischungen davon, eingesetzt werden.

Geeignete anionische Tenside sind beispielsweise Diphenylenoxidsulfonate, Alkan- und Alkylbenzolsulfonate, Atkylnaphthalinsulfonate, Olefinsulfonate, Alkylethersulfonate, Fettalkoholsulfate, Ethersulfate, α-Sulfofettsäureester, Acylaminoalkansulfonate, Acylisothionate, Alkylethercarboxylate, N-Acylsarcosinate, Alkyl- und Alkylether-phosphate. Als nicht ionische Tenside können Alkylphenolpolyglykolether, Fettalkohol-polyglykolether, Fettsäurepolyglykol-ether, Fettsäurealkanolamide, Ethylenoxid/-Propylenoxid-Blockcopolymere, Aminoxide, Glycerin-fettsäureester, Sorbitanester und Alkylpolyglykoside verwendet werden. Als kationische Emulgatoren können z. B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-Formaldehyd-Vorkondensat eingesetzt werden.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Prinzipiell können bei dem erfindungsgemäßen Verfahren gemäß der zweiten Ausführungsform sowohl physikalische als auch chemische Treibmittel verwendet werden.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Als Treibmittel eignen sich "physikalische" oder "chemische" Treibmittel (Encyclopedia of Polymer Science and Technology, Vol. I, 3. Aufl., Kapitel Additives, Seite 203 bis 218, 2003).

Als "physikalische" Treibmittel eignen sich beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%, bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80 °C zugesetzt.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

In einer weiteren Ausführungsform enthält die Mischung neben dem Melamin/Formaldehyd-Vorkondensat des herzustellenden Schaumstoffes und den nanoporösen Partikeln, auch einen Emulgator sowie gegebenenfalls einen Härter.

In einer weiteren Ausführungsform ist die Mischung frei von weiteren Zusatzstoffen.

Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen, von den nanoporösen Partikeln verschiedenen Zusatzstoffen, wie Fasern, Farbstoffe, Flammschutzmittel, UV-Stabilisatoren, Mittel zur Herabsetzung der Brandgastoxizität oder zur Förderung der Verkohlung, Duftstoffe, optische Aufheller oder Pigmente zuzusetzen. Diese Zusatzstoffe sind bevorzugt homogen in dem Schaumstoff verteilt.

Als Pigmente können beispielsweise die gängigen organischen Pigmente eingesetzt werden. Diese Pigmente können zuvor mit den nanoporösen Partikeln vermengt werden.

Im nachfolgenden Schritt des erfindungsgemäßen Verfahrens erfolgt das Aufschäumen des Vorkondensates in der Regel durch Erhitzen der Suspension des Melamin-/Formaldehyd-Vorkondensates und der nanoporösen Partikel, um einen Schaumstoff zu erhalten, der nanoporöse Partikel enthält. Dazu wird die Suspension in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Eine Nachbehandlung kann auch zur Hydrophobierung des Schaumstoffs eingesetzt werden. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen Schaumstoffblöcke bzw. -platten, die zu beliebigen Formen zurechtgeschnitten werden können.

Die Schaumstoffblöcke bzw. -platten können optional in einem weiteren Verfahrensschritt thermokomprimiert werden. Die Thermokomprimierung als solche ist dem Fachmann bekannt und beispielsweise in WO 2007/031944, EP-A 451 535, EP-A 111 860 und US-B 6,608,118 beschrieben. Durch die Thermokomprimierung kann oftmals eine bessere Fixierung der partikelförmigen Füllmaterialien an die offenzellige Schaumstruktur erreicht werden.

Der nach dem erfindungsgemäßen Verfahren erhältliche Schaumstoff hat bevorzugt eine offenzellige Struktur mit einer Offenzelligkeit, gemessen nach DIN ISO 4590, von mehr als 50%, insbesondere mehr als 80%.

Der mittlere Porendurchmesser liegt im Bereich von 10 bis 1000 µm, insbesondere im Bereich von 50 bis 600 µm.

### Verarbeitung

Wird das Material hergestellt durch ein Verfahren gemäß erster oder zweiter erfindungsgemäßer Ausführungsform in Form von flächigen Gebilden, wie z. B. Platten oder Matten, verwendet, kann es auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzbarkeit zu schützen. Die Deckschichten können auch die mechanische Stabilität des Verbundstoff-Formteils verbessern. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z. B. Kunststofffolien, vorzugsweise Metallfolien oder metallisierte Kunststofffolien, die Wärmestrahlung reflektieren. Es können aber auch poröse Deckschichten verwendet werden, die ein Eindringen von Luft in das Material ermöglichen und damit zu einer besseren Schalldämpfung führen, wie z. B. poröse Folien, Papiere, Gewebe oder Vliese.

Desweiteren können die Kaschierungen oder Laminierungen beispielsweise unter weitgehender Erhaltung der akustischen Eigenschaften mit sogenannten "offenen" Systemen, wie beispielsweise Lochplatten erfolgen.

Die Deckschichten können selbst auch aus mehreren Schichten bestehen. Die Deckschichten können mit dem Bindemittel befestigt sein, durch das die Fasern und die Aerogel-Partikel untereinander und miteinander verbunden sind, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden. Als Materialien sind z. B. thermoplastische Polymere, wie z. B. Polyethylen und Polypropylen, oder Harze wie z. B. Melaminformaldehydharze geeignet.

Die erfindungsgemäßen Verbundmaterialien weisen Wärmeleitfähigkeiten zwischen 10 und 100 mW/mK, vorzugsweise im Bereich von 10 bis 50 mW/mK, besonders bevorzugt im Bereich von 15 bis 40 mW/mK auf.

### Verwendung

Die vorliegende Erfindung betrifft auch die Verwendung eines erfindungsgemäßen Schaumstoffs zur Wärme- oder Schalldämmung, insbesondere im Bauwesen, im Automobil-, Schiffs- oder Schienenfahrzeugbau, beim Bau von Raumfahrzeugen oder in der Polsterindustrie.

Dabei finden die erfindungsgemäßen Melaminharzschäume Anwendung in der Bepolsterung von Sitz- und Liegeflächen, sowie für Rücken- und Armlehnen, als Wärme-, Kälte- und/oder Schallschutz bzw. Dämmung bzw. Isolierung von Gebäuden und Gebäudeteilen, insbesondere von Wänden, Zwischenwänden, Dächern, Fassaden, Türen, Decken und Fußböden, von Fahrzeugen aller Art zu Land, zu Wasser, in der Luft und im All, sei es zur Lasten- oder zur Personenbeförderung oder einer derartigen Kombination in Personenkraftwagen, Lastkraftwagen, z. B. zur Isolierung des Motorraumes (wie Motorhauben) oder Fahrgastzellen, beim Schienen-verkehr in den Wagons im Güter oder Personenverkehr sowie in Lokomotiven, in Luftfahrzeugen, z. B. im Kabineninnenraum, dem Cockpit oder im Frachtraum sowie in der Raumfahrt in bemannten oder unbemannten Flugobjekten, wie Raumschiffen und Raumgleitern, Raumkapseln oder Satelliten, zur Tieftemperaturisolierung, z. B. von Kühlaggregaten, Kühlschränken, Kühlhäusern, Tankanlagen und Behälter für beliebige Flüssigkeiten, insbesondere für Öl und Gas, bzw. Flüssiggas zur Lagerung und im Transport sowie im Textilbereich (Kleidung). Vorzugsweise liegen Anwendungsfelder in Bereichen, die eine hohe Temperaturstabilität und geringe Entflammbarkeit voraussetzen, z.B. in Porenbrennern. Ferner kann der erfindungsgemäße Melaminharzschaumstoff als Reinigungsschwamm zur Entfernung hartnäckiger Verschmutzungen angewendet werden.

### Beispiele

### Beispiel 1

### Herstellung eines modifizierten Melamin-/Formaldehydschaumstoffs

Ein Schaumkörper aus Basotect® mit einem Durchmesser von 255 mm und einer Dicke von 40 mm wurde in einem Büchnertrichter mit einem Durchmesser von 25 cm gegeben. Der Trichter wurde auf eine Saugflasche gesetzt, welche mit einer Öldrehschieberpumpe verbunden wurde. Bei einem Unterdruck von 200 mbar wurden Aerogel auf Basis SiO₂ in den Schaumkörper eingesaugt. Es wurde ein Beladung von 62 Vol.-% erzielt.

Das anorganische Aerogel auf Basis SiO₂ ist durch folgende Eigenschaften gekennzeichnet:

| | |
|---|---|
| Wärmeleitfähigkeit: | 18 mW/mK |
| Porosität: | > 90 |
| Porendurchmesser: | 10 - 30 nm |
| Dichte: | 30 - 50 kg/m³ |
| Partikeldurchmesser: | 7 - 11 µm (D₅₀) |
| Oberflächeneigenschaft: | hydrophob |
| Opazität: | durchscheinend |

Aus dem erfindungsgemäßen modifizierten Schaumkörper E und einem unmodifizierten Basotecl® Schaum (Schaumkörper A) wurden jeweils eine Rechteckplatte mit den Abmessungen 170 x 170 x 40 mm in einer elektrisch beheizten und temperaturgeregelten hydraulischen Plattenpresse in Richtung der kürzesten Raumkoordinate bei 200 °C und 4 bar für 3 min auf die Hälfte des Ausgangsvolumens komprimiert.

Mit einer Vorrichtung (Lambda-Control, Fa. Hesto) wurde die thermische Leitfähigkeit zwischen 10 und 36°C (Mittelwert 23°C) bestimmt.

Die Ergebnisse sind in Tabelle 1 zusammengestellt.

| Schaumkörper | Dichte [g/l] | Aerogel [Vol-%] | Thermische Leitfähigkeit [mW/m*K] |
|---|---|---|---|
| E | 45,0 | 62 | 25,1 |
| A | 19,6 | - | 31,3 |

### Beispiel 2

An den gemäß Beispiel 1 hergestellten Schaumkörpern E und A wurde gemäß ISO 10 534-2 der Absorptionskoeffizient bestimmt, siehe Tabelle 2:

| | Absorptionskoeffizient, 20 mm Plattenstärke | |
|---|---|---|
| Frequenz [Hz] | E | A |
| | | |
| 100 | 0,053 | 0,063 |
| 125 | 0,059 | 0,054 |
| 160 | 0,073 | 0,056 |
| 200 | 0,083 | 0,06 |
| 250 | 0,113 | 0,075 |
| 315 | 0,147 | 0,084 |
| 400 | 0,249 | 0,099 |
| 500 | 0,453 | 0,14 |
| 630 | 0,829 | 0,203 |
| 800 | 0,886 | 0,273 |
| 1000 | 0,718 | 0,349 |
| 1250 | 0,851 | 0,455 |
| 1600 | 0,898 | 0,586 |
| 2000 | 0,806 | 0,706 |
| 2500 | 0,685 | 0,816 |
| 3150 | 0,597 | 0,908 |
| 4000 | 0,615 | 0,951 |
| 5000 | 0,727 | 0,947 |

Das erfindungsgemäße Material E weist eine deutlich verbesserte, niedrigere Wärmeleitfähigkeit und eine deutlich verbesserte Schallabsorption im mittelfrequenten Raum auf.

Vergleichsbeispiel 3: Herstellung eines Melamin-/Formaldehyd-Schaumstoffes ohne Füllmaterialien (nach WO-A-2009/021963).

75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Melamin-/Formaldehyd-Schaumstoff hat eine Dichte von 10 g/l. Die thermische Leitfähigkeit beträgt 34,2 mW/m*K.

### Referenz-Beispiel 4

Es wurde anorganisches Aerogel auf Basis SiO₂ gemäß WO 95/06617 hergestellt. Das anorganische Aerogel ist durch folgende Eigenschaften gekennzeichnet:

| | |
|---|---|
| Wärmeleitfähigkeit: | 35 mW/mK der Schüttung |
| Schüttdichte: | 120 kg/m³ |
| Partikeldurchmesser: | 1-20 mm (D₅₀). |
| Opazität: | durchscheinend |

Das Aerogel wurde gesiebt und die Teilchengrößen 8-20 mm wurden für die nachfolgende Schäumversuche eingesetzt. Die Wärmeleitfähigkeit dieser Siebfraktion betrug 35 mW/m*K.

### Referenz-Beispiel 5

Herstellung eines Melamin-/Formaldehyd-Schaumstoffes mit 93 Gew.-% anorganischem Aerogel gemäß Beispiel 4 (bezogen auf das Gesamtgewicht aus zur Schaumstoffherstellung eingesetztem Melamin-/Formaldehyd-Vorkondensat und partikelförmigem Füllmaterial) als Füllmaterial.

75 Gew.-Teile eines sprühgetrockneten Melamin-/Formaldehyd-Vorkondensates (MolVerhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, und 1015 Gew.-Teile anorganisches Aerogel (Korngröße: 8 bis 18 mm, mittlerer Teilchendurchmesser 10,4 mm (d₅₀-Wert, zahlengemittelt, bestimmt mittels Licht-oder Elektronenmikroskopie in Verbindung mit Bildauswertung)) zugesetzt, anschließend gerührt und dann in einer Form aus Polypropylen (zum Schäumen) durch Einstrahlung von Mikrowellenenergie verschäumt. Die Menge an Aerogel wurde so gewählt, dass die Schäumform vollständig mit einer Schüttung aus Aerogelen ausgefüllt ist. Nach dem Verschäumen wurde 30 Minuten getrocknet.

Der Schaumstoff hat eine Dichte von 137 g/l und eine thermische Leitfähigkeit von 22,6 mW/m*K. Der Schaumstoff erfüllte die Anforderungen an die Brandklasse A2 nach DIN EN 13501-1.

### Verwendete Normen und Messverfahren:

Diese Europäische Norm DIN EN 13501-1, Klassifizierung von Bauprodukten und Bauarten zu ihrem Brandverhalten, legt die Verfahren zur Klassifizierung des Brandverhaltens von Bauprodukten einschließlich der Produkte innerhalb von Bauteilen fest. Ein Bauprodukt, das für die Klasse A2 vorgesehen ist, muss entweder nach EN ISO 1182 oder EN ISO 1716 geprüft werden. Zusätzlich müssen alle Bauprodukte, die für die Klasse A2 vorgesehen sind, nach EN 13823 geprüft werden.

Die thermische Leitfähigkeit wurde mit einer Vorrichtung (Lambda-Control, Fa. Hesto) zwischen 10 und 36°C (Mittelwert 23 °C) bestimmt.

## Patentansprüche

1. Melaminharzschaumstoff enthaltend Partikel, **dadurch gekennzeichnet, dass** die Partikel nanoporös und vorzugsweise granulär sind, wobei der Schaumstoff eine Porengröße von 10 bis 1000 µm aufweist, die nanoporösen Partikel eine Partikelgröße (D₅₀-Wert) von 0,1 bis 100 µm, insbesondere von 1 bis 30 µm, aufweisen, und die Dichte des Schaumstoffes enthaltend Partikel im Bereich von 20 bis 70 g/l liegt.

2. Schaumstoff gemäß Anspruch 1, **dadurch gekennzeichnet, dass** der Schaumstoff ein Melamin/Formaldehydharz ist.

3. Schaumstoff gemäß wenigstens einem der vorhergehenden Ansprüche, **dadurch gekennzeichnet, dass** der Schaumstoff ein Melamin/Formaldehydharz ist mit einem Molverhältnis Melamin zu Formaldehyd von 1 : 1,2 bis 1 : 4.

4. Schaumstoff nach wenigstens einem der vorhergehenden Ansprüche, **dadurch gekennzeichnet, dass** der Schaumstoff 1 bis 99 Vol-%, bevorzugt 5 bis 95 Vol.%, besonders bevorzugt 10 bis 90 Vol.-% nanoporöse Partikel oder deren Gemische enthält.

5. Schaumstoff gemäß wenigstens einem der vorhergehenden Ansprüche, **dadurch gekennzeichnet, dass** die Partikel eine Porosität von 50 bis 99, insbesondere 70 bis 99, besonders bevorzugt 80 bis 99 aufweisen.

6. Schaumstoff gemäß wenigstens einem der vorhergehenden Ansprüche, **dadurch gekennzeichnet, dass** die Partikel Aerogele oder Aerosile sind.

7. Schaumstoff gemäß wenigstens einem der vorhergehenden Ansprüche, **dadurch gekennzeichnet, dass** die Partikel anorganisch sind.

8. Schaumstoff gemäß wenigstens einem der vorhergehenden Ansprüche, **dadurch gekennzeichnet, dass** die Partikel organisch sind.

9. Schaumstoff gemäß wenigstens einem der vorhergehenden Ansprüche, **dadurch gekennzeichnet, dass** die Partikel organisch modifiziert, insbesondere hydrophob modifiziert sind.

10. Schaumstoff gemäß wenigstens einem der Ansprüche 1 bis 6 oder 8 bis 12, **dadurch gekennzeichnet, dass** die nanoporösen Partikel SiO₂-Aerogele mit folgenden Parametern sind:
| | |
|---|---|
| Porosität: | 50 bis 99, insbesondere 70 bis 99, besonders bevorzugt 80 bis 99 |
| Dichte: | von 30 bis 300 g/L, bevorzugt ≤ 150 g/L |
| Partikeldurchmesser: | von 0,1 bis 100 µm, bevorzugt von 1 bis 30 µm (D₅₀) |
| Porendurchmesser: | 0,1 bis 500 nm, insbesondere < 200 nm, besonders bevorzugt < 100 nm |

11. Schaumstoff gemäß wenigstens einem der vorhergehenden Ansprüche, **dadurch gekennzeichnet, dass** zusätzlich Trübungsmittel enthalten sind.

12. Verfahren zur Herstellung eines Melaminharzschaumstoffes enthaltend nanoporöse granuläre Partikel mit einer Dichte im Bereich von 20 bis 70 g/l, **dadurch gekennzeichnet, dass** der Melaminharzschaumstoff mit den Partikeln, vorzugsweise in granulärer Form, imprägniert und gegebenenfalls anschließend thermokomprimiert wird, wobei der Schaumstoff eine Porengröße von 10 bis 1000 µm aufweist und die nanoporösen Partikel eine Partikelgröße (D₅₀-Wert) von 0,1 bis 100 µm, insbesondere von 1 bis 30 µm, aufweisen.

13. Verfahren zur Herstellung eines Melaminharzschaumstoffes enthaltend nanoporöse granuläre Partikel mit einer Dichte im Bereich von 20 bis 70 g/l, **dadurch gekennzeichnet dass** eine Mischung hergestellt wird, enthaltend mindestens ein Melamin/Formaldehyd-Vorkondensat, mindestens ein Lösungsmittel, mindestens ein Treibmittel und mindestens einen nanoporösen Partikel, diese Mischung verschäumt und der erhaltene Schaumstoff anschließend getrocknet und gegebenenfalls thermokomprimiert wird, wobei der Schaumstoff eine Porengröße von 10 bis 1000 µm aufweist und die nanoporösen Partikel eine Partikelgröße (D₅₀-Wert) von 0,1 bis 100 µm, insbesondere von 1 bis 30 µm, aufweisen.

14. Verwendung eines Schaumstoffs gemäß wenigstens einem der vorhergehenden Ansprüche zur Wärme- oder Schalldämmung.

15. Verwendung nach Anspruch 14 im Bauwesen, im Automobil-, Schiffs- oder Schienenfahrzeugbau, beim Bau von Raumfahrzeugen oder in der Polsterindustrie.

## Claims

1. A melamine resin foam comprising particles, said particles being nanoporous and preferably granular, the foam having a pore size in the range from 10 to 1000 µm, the nanoporous particles having a particle size (D₅₀ value) in the range from 0.1 to 100 µm and more particularly in the range from 1 to 30 µm, and the density of the foam comprising particles being in the range from 20 to 70 g/L.

2. The foam according to claim 1 which is a melamine-formaldehyde resin.

3. The foam according to one or more of the preceding claims which is a melamine-formaldehyde resin having a melamine-to-formaldehyde molar ratio in the range from 1 : 1.2 to 1 : 4.

4. The foam according to one or more of the preceding claims comprising from 1% to 99% by volume, preferably from 5% to 95% by volume and more preferably from 10% to 90% by volume of nanoporous particles or mixtures thereof.

5. The foam according to one or more of the preceding claims wherein the particles have a porosity of 50 to 99%, especially 70 to 99% and more preferably 80 to 99%.

6. The foam according to one or more of the preceding claims wherein the particles are aerogels or aerosils.

7. The foam according to one or more of the preceding claims wherein the particles are inorganic.

8. The foam according to one or more of the preceding claims wherein the particles are organic.

9. The foam according to one or more of the preceding claims wherein the particles are organomodified and more particularly are modified to be hydrophobic.

10. The foam according to one or more of claims 1 to 6 or 8 to 12 wherein the nanoporous particles are SiO₂ aerogels having the following parameters:
porosity: 50 to 99, especially 70 to 99, more preferably 80 to 99
density: from 30 to 300 g/L, preferably ≤ 150 g/L
particle diameter: from 0.1 to 100 µm, preferably from 1 to 30 µm (D₅₀)
pore diameter: 0.1 to 500 nm, especially < 200 nm, more preferably < 100 nm.

11. The foam according to one or more of the preceding claims further comprising an opacifier.

12. A process for producing a melamine resin foam comprising nanoporous granular particles having a density in the range from 20 to 70 g/L, which comprises the melamine resin foam being impregnated with the particles, preferably in granular form, and optionally thermocompressed thereafter, the foam having a pore size in the range from 10 to 1000 µm and the nanoporous particles having a particle size (D₅₀ value) in the range from 0.1 to 100 µm and more particularly in the range from 1 to 30 µm.

13. A process for producing a melamine resin foam comprising nanoporous granular particles having a density in the range from 20 to 70 g/L, which comprises producing a mixture comprising at least one melamine-formaldehyde precondensate, at least one solvent, at least one blowing agent and at least one nanoporous particle, foaming this mixture and the foam obtained being subsequently dried and optionally thermocompressed, the foam having a pore size in the range from 10 to 1000 µm and the nanoporous particles having a particle size (D₅₀ value) in the range from 0.1 to 100 µm and more particularly in the range from 1 to 30 µm.

14. The use of a foam according to one or more of the preceding claims for thermal or acoustical insulation.

15. The use according to claim 14 in building construction, in automotive, ship or track vehicle building, in the building of spacecraft or in the furniture industry.

## Revendications

1. Mousse de résine de mélamine contenant des particules, **caractérisée en ce que** les particules sont nanoporeuses et de préférence granulaires, la mousse présentant une taille de pores de 10 à 1 000 µm, les particules nanoporeuses présentant une taille de particules (valeur D₅₀) de 0, 1 à 100 µm, notamment de 1 à 30 µm, et la densité de la mousse contenant des particules se situant dans la plage allant de 20 à 70 g/l.

2. Mousse selon la revendication 1, **caractérisée en ce que** la mousse est une résine de mélamine/formaldéhyde.

3. Mousse selon au moins l'une quelconque des revendications précédentes, **caractérisée en ce que** la mousse est une résine de mélamine/formaldéhyde ayant un rapport molaire entre la mélamine et le formaldéhyde de 1:1,2 à 1:4.

4. Mousse selon au moins l'une quelconque des revendications précédentes, **caractérisée en ce que** la mousse contient 1 à 99 % en volume, de préférence 5 à 95 % en volume, de manière particulièrement préférée 10 à 90 % en volume de particules nanoporeuses ou leurs mélanges.

5. Mousse selon au moins l'une quelconque des revendications précédentes, **caractérisée en ce que** les particules présentent une porosité de 50 à 99, notamment de 70 à 99, de manière particulièrement préférée de 80 à 99.

6. Mousse selon au moins l'une quelconque des revendications précédentes, **caractérisée en ce que** les particules sont des aérogels ou des aérosils.

7. Mousse selon au moins l'une quelconque des revendications précédentes, **caractérisée en ce que** les particules sont inorganiques.

8. Mousse selon au moins l'une quelconque des revendications précédentes, **caractérisée en ce que** les particules sont organiques.

9. Mousse selon au moins l'une quelconque des revendications précédentes, **caractérisée en ce que** les particules sont modifiées organiquement, notamment hydrophobiquement.

10. Mousse selon au moins l'une quelconque des revendications 1 à 6 ou 8 à 12, **caractérisée en ce que** les particules nanoporeuses sont des aérogels de SiO₂ présentant les paramètres suivants :
porosité : 50 à 99, notamment 70 à 99, de manière particulièrement préférée 80 à 99,
densité : de 30 à 300 g/l, de préférence ≤ 150 g/l,
diamètre de particules : de 0,1 à 100 µm, de préférence de 1 à 30 µm (D₅₀),
diamètre de pores : 0,1 à 500 nm, notamment < 200 nm, de manière particulièrement préférée < 100 nm.

11. Mousse selon au moins l'une quelconque des revendications précédentes, **caractérisée en ce que** des opacifiants sont en outre contenus.

12. Procédé de fabrication d'une mousse de résine de mélamine contenant des particules granulaires nanoporeuses d'une densité dans la plage allant de 20 à 70 g/l, **caractérisé en ce que** la mousse de résine de mélamine est imprégnée avec les particules, de préférence sous forme granulaire, puis éventuellement thermocomprimée, la mousse présentant une taille de pores de 10 à 1 000 µm et les particules nanoporeuses présentant une taille de particule (valeur D₅₀) de 0,1 à 100 µm, notamment de 1 à 30 µm.

13. Procédé de fabrication d'une mousse de résine de mélamine contenant des particules granulaires nanoporeuses d'une densité dans la plage allant de 20 à 70 g/l, **caractérisé en ce qu'**un mélange est fabriqué, contenant au moins un précondensat de mélamine/formaldéhyde, au moins un solvant, au moins un agent gonflant et au moins une particule nanoporeuse, ce mélange est moussé et la mousse obtenue est ensuite séchée et éventuellement thermocomprimée, la mousse présentant une taille de pores de 10 à 1 000 µm et les particules nanoporeuses présentant une taille de particule (valeur D₅₀) de 0,1 à 100 µm, notamment de 1 à 30 µm.

14. Utilisation d'une mousse selon au moins l'une quelconque des revendications précédentes pour l'isolation thermique ou acoustique.

15. Utilisation selon la revendication 14 dans des bâtiments, dans la construction d'automobiles, de navires ou de véhicules ferroviaires, lors de la construction de véhicules spatiaux ou dans l'industrie des rembourrages.
